# EUROPEAN PATENT APPLICATION

(11) **EP 2 073 582 A1**
(43) Date of publication of application: **24.06.2009**
(21) Application number: 07024730.9
(22) Date of filing: 20.12.2007
(51) Int. Cl.: H04W 16/00, H04W 4/00

(54) **Method for controlling the operation of a base station of a wireless cellular telecommunication network**

(71) Applicant: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Voyer, Nicolas, CS 10806 35708 Rennes Cedex 7 (FR); Bonneville, Hervé, CS 10806 35708 Rennes Cedex 7 (FR)
(74) Representative: Maillet, Alain

(57) **Abstract**

The present invention concerns a method and a device for controlling the operation of a base station of a wireless cellular telecommunication network comprising a network server. The network server:
- transfers a location request message to the base station (S600),
- receives in response, a certificate originated by a third party (S601),
- checks the validity of the certificate (S602),
- obtains information representative of the location of the base station,
- checks if the base station is located in a given geographical area (S603),
- transfers a command control message enabling the base station to transfer radio signals if the certificate is valid and if the base station is located in the given geographical area (S604).

## Description

The present invention relates to a method for controlling the operation of a base station of a wireless cellular telecommunication network.

Today, wireless cellular telecommunication networks are deployed by installing base stations in public areas, those base stations covering areas having a typical radius of several kilometres or several hundreds of meters. These base stations are called macro or micro base stations depending of their coverage extension. They are typically installed by the operator in places well identified after some radio planning study, and remain under its control.

In addition to this legacy deployment, it's envisaged to have smaller base stations, called pico or femto base stations, located in homes, with the aim of extending wireless cellular telecommunication networks in-home coverage, increasing offered bandwidth while relaxing macro-cells load.

Conversely to macro base stations, the control by the network operator of these home base stations will be lost; in particular a user may move the base station located in its home to another location.

This may be problematic since the base station configuration, for example the frequency band to use, the list of neighbour base stations, the core network nodes the base station has to connect to, depend on its location. A wrong configuration may lead to a lack of performance, to network resources waste and may generate strong interferences with neighbouring cells.

Moreover, knowing the location of the base stations located at home may be mandatory in some countries, regarding radio protection and radio license policy.

A remaining issue is how the operator of a wireless cellular telecommunication network can be certain of the location of a given base station. Nothing guarantees that the location provided by the base station at the time of setup is correct. A rogue base station could provide fake location information, or with a not sufficient level of accuracy. This could alter the behaviour of the wireless cellular telecommunication network.

For instance, as the base station may be connected to the wireless cellular telecommunication network via Internet, the base station of one operator in a given country could be deployed in another country, impacting the quality of other operator in the other country which can not control the base station. Such deployment should be prevented, and network operators can not rely only on the good will of base station owner to fill the accurate information.

The aim of the invention is therefore to propose a method and a device which enable to control the operation of a base station of a wireless cellular telecommunication network according to its location and from secured data.

To that end, the present invention concerns a method for controlling the operation of a base station of a wireless cellular telecommunication network comprising a network server, **characterised in that** the method is executed by the network server and comprises the steps of:
- transferring a location request message to the base station,
- receiving in response, a certificate originated by a third party,
- checking the validity of the certificate,
- obtaining information representative of the location of the base station,
- checking if the base station is located in a given geographical area,
- transferring a command control message enabling the base station to transfer radio signals if the certificate is valid and if the base station is located in the given geographical area.

The present invention concerns also a device for controlling the operation of a base station of a wireless cellular telecommunication network comprising a network server, **characterised in that** the device is included in the network server and comprises:
- means for transferring a location request message to the base station,
- means for receiving in response a certificate originated by a third party,
- means for checking the validity of the certificate,
- means for obtaining information representative of the location of the base station,
- means for checking if the base station is located in a given geographical area,
- means for transferring a command control message enabling the base station to transfer radio signals if the certificate is valid and if the base station is located in the given geographical area.

Thus, it is possible to control the operation of the base station of the wireless cellular telecommunication network according to its location and from secured data.

Furthermore, the operator of the wireless cellular telecommunication network can be certain of the location of the base station as the location is guaranteed by the third party and that the certificate can not be falsified.

According to a particular feature, the network server checks if a variable is compatible with a threshold and the command control message enabling the base station to transfer radio signals is transferred if the variable is compatible with the threshold.

Thus, the checking of the location of the base station can be realised even if the certificate is replayed some time after the third party has certified the location of the base station. The network server can estimate if it is likely that the base station has been moved since the time the third party has produced the certificate.

According to a particular feature, the network server transfers a command control message disabling the transfer of radio signals by the base station if the certificate is not valid or if the base station is not located in the given geographical area.

Thus, the base station will not disturb other devices if it is not located in the given location area or the base station will not be allowed to transfer radio signals if there are some problems on the certificate.

According to a particular feature, the command control message disabling the transfer of radio signals by the base station is transferred if the variable is not compatible with the threshold.

According to a particular feature, the variable is a timestamp comprised in the certificate.

Thus, the base station will not disturb other devices if it is not located in the given location area or the base station will not be allowed to transfer radio signals if there are some problems on the certificate.

Thus, only recent certificates are considered to be correct.

According to a particular feature, the location request message comprises a token and the certificate is not valid if the token is not comprised in the certificate.

Thus, only certificates in response to a location request message are considered to be correct.

According to a particular feature, the information representative of the location of the base station are derived from the content of the certificate.

Thus, the location ofbase station can be directly determined.

According to a particular feature, the certificate comprises the information representative of the location of the base station.

Thus, the location of base station can be directly determined.

According to a particular feature, the third party is a mobile terminal and the certificate comprises information representative of the location of the mobile terminal.

According to a particular feature, the information representative of the location of the mobile terminal are representative of the relative position of the mobile terminal from the base station and/or representative of the relative position of the mobile terminal from a reference point different from the base station.

The relative position of the mobile terminal from the base station enables the network server to check the accuracy of the base station location.

The relative position of the mobile terminal from a reference point different from the base station is given by a Global Navigation Satellite System and is accurate.

According to a particular feature, the information representative of the relative position of the mobile terminal from the base station is the type of communication interface used between the base station and the mobile terminal.

According to a particular feature, the certificate is not valid if the information representative of the relative position of the mobile terminal from the base station are upper than a predetermined value.

Thus, the network server can determine from the accuracy of the location if there is any chance that the base station is closed to an area where it is forbidden by law to transmit radio signals at full power (hospitals, schools, etc).

Only certificates including locations that are accurate enough are considered to be correct.

According to a particular feature, the certificate contains the identifier of the base station and the certificate is not valid if the identifier of the base station is not correct.

According to a particular feature, the identifier of the base station is signed by the base station.

Thus, the network server can rely on the identifier of the base station.

According to a particular feature, the certificate originated by the third party is received from the base station or from another base station of the wireless cellular telecommunication network or through a communication link between the network server and the third party.

Thus, the network server can restrict the proof of location as coming from specific trusted sources, such as specific mobile terminals, or access nodes of specific fixed access providers.

According to a particular feature, the information representative of the location of the base station is derived from the other base station location.

Thus, the third party doesn't need to contain any specific location module, it can simply consists of one mobile terminal reporting the identity and/or radio levels of surrounding other base stations. The complexity of mobile terminal is limited and any conventional mobile terminal can act as third party.

The present invention concerns also a method for controlling the transfer of radio signals by a base station of a wireless cellular telecommunication network, the wireless cellular telecommunication network comprising a network server, **characterised in that** the method is executed by the base station and comprises the steps of
- receiving from the network server a location request message,
- transferring the location request message to a third party,
- receiving, from the network server, a command control message enabling the base station to transfer radio signals or a command control message disabling the transfer of radio signals by the base station.

The present invention concerns also a device for controlling the transfer of radio signals by a base station of a wireless cellular telecommunication network, the wireless cellular telecommunication network comprising a network server, **characterised in that** the device is included in the base station and comprises:
- means for receiving from the network server a location request message,
- means for transferring the location request message to a third party,
- means for receiving, from the network server, a command control message enabling the base station to transfer radio signals or a command control message disabling the transfer of radio signals by the base station.

Thus, it is possible to control the operation of the base station of the wireless cellular telecommunication network according to its location and from secured data as far as a third party is involved.

Furthermore the operator of the wireless cellular telecommunication network can be certain of the location of the base station as the location is guaranteed by the third party.

According to a particular feature, the base station receives, in response to the location request message transferred to the third party, a certificate and transfers the certificate to the network server.

Thus, from the network server side, the location certification procedure only involves the base station which location has to be certified. There is no synchronism issue related to the dealing of messages coming from multiple interfaces.

According to a particular feature, the location request message is transferred to the third party through a short range communication link.

Thus, the accuracy of the location determination or the position determination of the base station can be easily determined from the type of short range communication, and/or from the accuracy of the location technique used by the third party.

According to a particular feature, the method further comprises the steps of memorising the received certificate.

Thus, the base station can update the certificate and be ready for next location request from the network node.

According to a particular feature, the certificate transferred to the network is the last memorised certificate.

Thus, a base station may receive a command control message from the network enabling the base station to transfer radio signals without waiting for the availability of a third party.

The present invention concerns also a method for certifying, by a third party, the location of a base station of a wireless cellular telecommunication network, **characterised in that** the third party is a mobile terminal and the method comprises the steps of
- determining that the base station is within a given distance from the mobile terminal,
- transferring a certificate including at least information representative of the location ofthe mobile terminal.

The present invention concerns also a device for certifying the location of a base station of a wireless cellular telecommunication network, **characterised in that** the device is included in a mobile terminal and comprises:
- means for determining that the base station is within a given distance from the mobile terminal,
- means for transferring a certificate including at least information representative of the location of the mobile terminal.

Thus, it is possible to get a fair estimation of the location of the base station, as it is coming from a reliable source.

According to a particular feature, the information representative of the location of the mobile terminal are representative of the relative position of the mobile terminal from the base station and/or representative of the relative position of the mobile terminal from a reference point different from the base station.

Thus, the network server can determine from the accuracy of position if there is any chance that the base station is closed to an area where it is forbidden by law to transmit radio signals at full power (hospitals, schools, etc).

The relative position of the mobile terminal from the base station enables the network server to check the accuracy of the base station location.

The relative position of the mobile terminal from a reference point different from the base station is given by a Global Navigation Satellite System and is accurate.

According to a particular feature, the information representative of the relative position of the mobile terminal from the base station is the type of communication interface used between the base station and the mobile terminal.

Thus, the accuracy of the location of the base station can be easily determined from the type of communication, and/or from the accuracy of the location technique used by the third party.

According to a particular feature, the certificate further comprises a timestamp.

Thus, only recent certificates are considered to be correct.

According to a particular feature, the mobile terminal memorises information representative of the location of the mobile terminal when the mobile terminal is located in the coverage area of another base station or in the coverage area of a Global Navigation Satellite System and the memorised information representative of the location of the mobile terminal is comprised in the transferred certificate.

According to a particular feature, the mobile terminal memorises the location request message transferred by the base station and the certificate is transferred when the mobile terminal is located in the coverage area of another base station or in the coverage area of a Global Navigation Satellite System.

According to still another aspect, the present invention concerns computer programs which can be directly loadable into a programmable device, comprising instructions or portions of code for implementing the steps of the methods according to the invention, when said computer programs are executed on a programmable device.

Since the features and advantages related to the computer programs are the same as those set out above related to the methods and devices according to the invention, they will not be repeated here.

The characteristics of the invention will emerge more clearly from a reading of the following description of an example embodiment, the said description being produced with reference to the accompanying drawings, among which:
Fig. 1 is a diagram representing the architecture of a cellular telecommunication network according to the present invention;
Fig. 2 is a block diagram of a network server according to the present invention ;
Fig. 3 is a block diagram of a base station according to the present invention ;
Fig. 4 is a block diagram of a third party according to the present invention ;
Fig.5 depicts an algorithm executed by the base station according to the present invention ;
Figs. 6a to 6c depict algorithms executed by the network server according to the different modes of realisation of the present invention ;
Figs. 7a to 7c depict algorithms executed by the base station according to the different modes of realisation of the present invention;
Fig. 8a depicts an algorithm executed by the third party when the third party is a mobile terminal;
Fig. 8b depicts another algorithm executed by the third party 40 when the third party is a mobile terminal ;
Fig. 9 depicts an algorithm executed by the third party when the third party is an access provider.

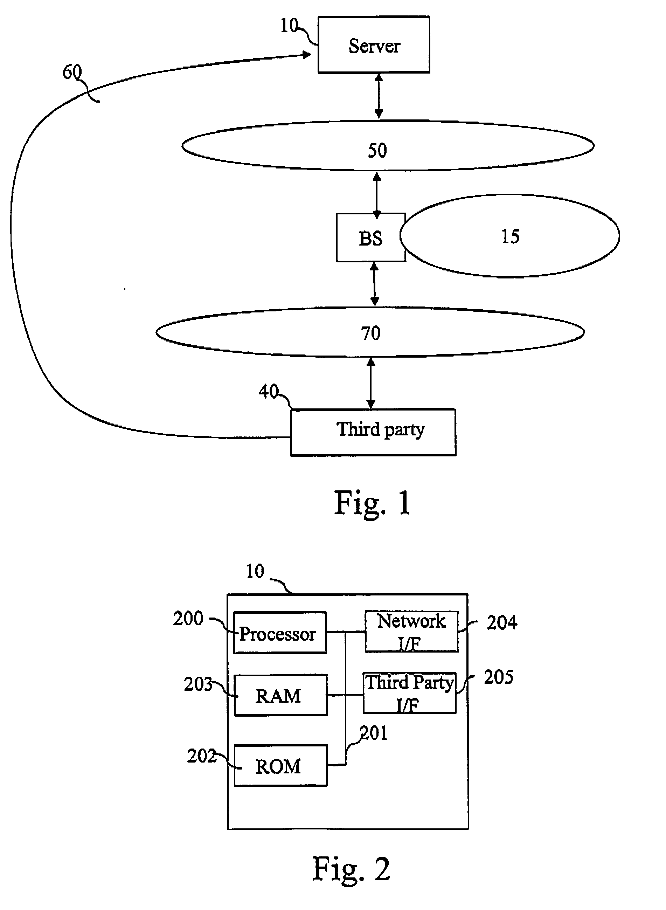

**Fig. 1** is a diagram representing the architecture of a cellular telecommunication network according to the present invention.

In the wireless cellular telecommunication network, a network server 10 is able to be connected to a base station BS through a telecommunication network 50. In practice, the network server 10 is connected to a plurality of base stations BS through the telecommunication network 50.

The telecommunication network 50 is a dedicated wired network or a public network like a public switched network or an IP based network or a wireless network or an Asynchronous Transfer Mode network or a combination of above cited networks.

The telecommunication network 50 enables the transfer of messages and of information between the base station BS and the network server 10 according to the present invention.

The base station BS is able to transfer and or receive signals or messages through at least one wireless area 15. Such wireless area 15 will be called hereinafter a cell 15 managed by the base station BS or a cell 15 of the base station BS.

The network server 10 stores the information related to the base stations BS of the wireless cellular telecommunication network. For each base station BS, the network server 10 stores a list of the base stations BS which are currently active, i.e. the base stations BS which transfer signals according to the present invention in their respective cells 15.

In the Fig. 1, only one network server 10 is shown, but we can understand that a more important number of network servers 10 can be used in the present invention.

In Long Term Evolution (LTE) network currently under discussion in 3GPP, the network server 10 is named a Mobility Management Entity (MME). In General Packet Radio Service network, the network server 10 is named a Serving GPRS Support Node (SGSN). In mobile IP network, the network server 10 is named a Foreign Agent (FA) and in GSM network, the network server 10 is named a Visitor Location Register (VLR).

In the Fig. 1, a third party 40 is shown. The third party 40 is linked through a communication network 70 to the base station BS. A third party 40 is an entity which is known and trusted by the network server 10.

As example, if the third party 40 is a mobile terminal, the mobile terminal is registered to the network server 10 through the information embedded in the SIM card (Subscriber Identity Module) of the mobile terminal. If the third party 40 is a maintenance device, the maintenance device embeds an identification code and a signature which is registered in the network server 10. Alternatively, the identification code and the signature can be owned by the technician and manually entered in the maintenance device.

The communication network 70 may be a cable, an infrared interface like an IrDa one, a short range radio interface like a Bluetooth © one or any Near Field Communication interface or is an ADSL link or an optic fibre.

According to the type of interface used for the communication network 70, it is possible to determine the location of the third party from the base station BS. Each of above mentioned interfaces have different communication ranges. If the third party and the base station BS are able to communicate through the communication network 70, it means that the location of the third party from the base station BS is lower than the range of the interface used.

Communicating the type of interface used for the communication network 70 is then equivalent to communicating the position of the third party from the base station BS.

In the Fig. 1, the network server 10 is linked to the third party 40 through a communication link 60. The communication link 60 is established on a dedicated wired network or on a public network like a public switched network or on an IP based network or on a wireless network or on an Asynchronous Transfer Mode network or a combination of above cited networks.

As example, the communication link 60 goes through another base station BS of the wireless cellular telecommunication network.

Typically, when the base station BS is installed, the base station BS first contacts the network server 10 of the wireless cellular telecommunication network. After identifying the base station BS, the network server 10 requests information certifying the location of the base station BS. If the location of the base station BS is correct, the network server 10 authorizes the base station BS to transfer at least one signal in the cell 15 the base station BS manages. If the location of the base station BS is not correct, the network server 10 doesn't allow the base station BS to transfer at least one signal in the cell 15 the base station BS manages.

It has to be noted here that the procedure may also apply at anytime, thus allowing the network server 10 to periodically monitor the base station BS true location.

Furthermore, the identification of the base station BS may be certified by the base station BS by signing the identifier of the base station BS by the private key of the base station BS.

**Fig. 2** is a block diagram of a network server according to the present invention.

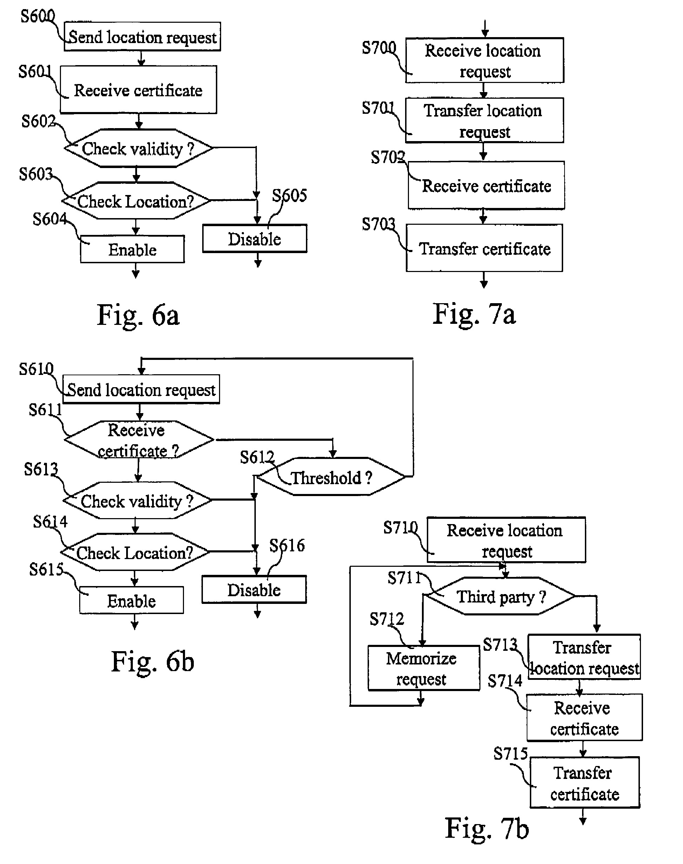

The network server 10 has, for example, an architecture based on components connected together by a bus 201 and a processor 200 controlled by the programs as disclosed in the Figs. 6a to 6c.

The bus 201 links the processor 200 to a read only memory ROM 202, a random access memory RAM 203 and a network interface 204.

The memory 203 contains registers intended to receive variables, information related to the base stations BS of the wireless cellular telecommunication network. For each base station BS, the network server 10 stores a list of the base stations BS which are currently active. The network server 10 may store also a list of third parties 40.

The processor 200 controls the operation of the network interface 204.

The read only memory 202 contains instructions of the programs related to the algorithms as disclosed in the Figs. 6a to 6c, which are transferred, when the network server 10 is powered on to the random access memory 203.

The network server 10 is connected to the telecommunication network 50 through the network interface 204. As example, the network interface 204 is a DSL (Digital Subscriber Line) modem, or an ISDN (Integrated Services Digital Network) interface, an Ethernet interface, etc. Through such interface, the network server 10 exchanges information with the base stations BS of the wireless cellular telecommunication network or with third parties 40 according to some mode of realisation of the present invention. The communications established or received by the mobile terminals comprised in the cell 15 managed by the base station BS go through the network interface 204.

The network server 10 is connected to the third party 40 through the third party interface 205. As example, the third party interface 205 is a DSL (Digital Subscriber Line) modem, or an ISDN (Integrated Services Digital Network) interface, an Ethernet interface, etc. Through such interface, the server 10 receives BS location information from the third party 40 via another base station BS. The network interface 205 may be merged with network interface 204.

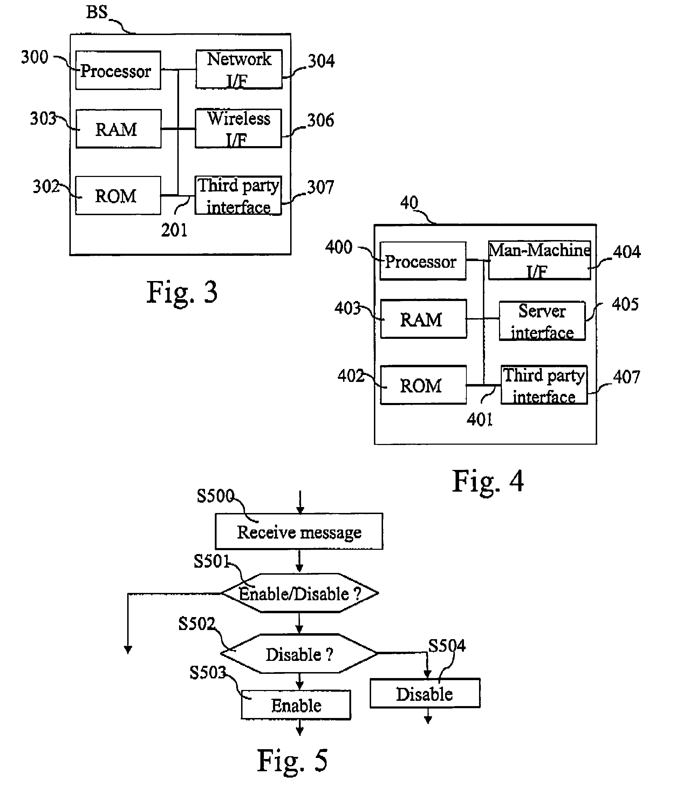

**Fig. 3** is a block diagram of a base station device according to the present invention.

The base station BS has, for example, an architecture based on components connected together by a bus 301 and a processor 200 controlled by the programs as disclosed in the Figs. 7a to 7c.

The bus 301 links the processor 300 to a read only memory ROM 302, a random access memory RAM 303, a network interface 304, a wireless interface 306 and a third party interface 307.

The memory 303 contains registers intended to receive variables and the instructions of the programs related to the algorithms as disclosed in the Figs. 7a to 7c.

The processor 300 controls the operation of the network interface 304, the wireless interface 306 and the third party interface 307.

The read only memory 302 contains instructions of the programs related to the algorithms as disclosed in the Figs. 7a to 7c, which are transferred, when the base station BS is powered on to the random access memory 303.

The base station BS is connected to the telecommunication network 50 through the network interface 304. As example, the network interface 304 is a DSL (Digital Subscriber Line) modem, or an ISDN (Integrated Services Digital Network) interface, etc. Through such interface, the base station BS exchanges information with the network server 10 and other base stations BS of the wireless cellular telecommunication network. The communications established or received by the mobile terminals comprised in the cell 15 managed by the base station BS go through the network interface 304 and the wireless interface 306.

The wireless interface 306 comprises means for enabling or disabling the transfer of signals by the base station BS in the cell 15 of the base station BS.

The means for enabling or disabling the transfer of signals enable or disable any signal transfer in the cell 15 of the base station BS or signals which are representative of at least one information.

That information identifies as example the network of which the base station BS belongs to. As example, and in a non limitative way, the information could be a network identity certificate produced by the network server 10, or an integrity protected NAS (Non Access Stratum) message at destination of a given mobile terminal and produced by the network server 10 with a security key known only by the mobile terminal and the network server 10, or an integrity protected RRC (Radio Resource Control) message produced by the base station BS with a security key provided to the base station BS by the network server 10.

The third party interface 307 may be a short range communication link like an infrared interface like an IrDa one, a short range radio interface like a Bluetooth © one or any Near Field Communication interface or is an ADSL modem or an optic fibre transceiver.

The third party interface 307 may comprise means for detecting when a third party 40 establishes a connection through the third party interface 307. Alternatively, the third party interface 307 may comprise means for periodically trying to establish a connection with a third party 40. The third party 40 is detected when the connection establishment succeeds.

**Fig. 4** is a block diagram of a third party according to the present invention.

The third party 40 is as example a mobile terminal, an access provider or the computer of the person which installs and/or maintains the base station BS.

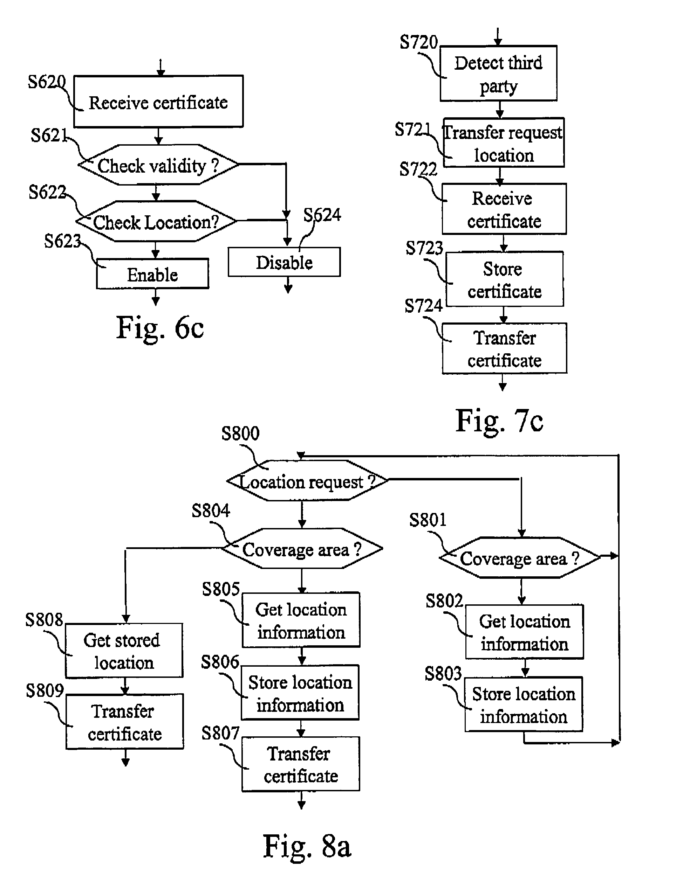

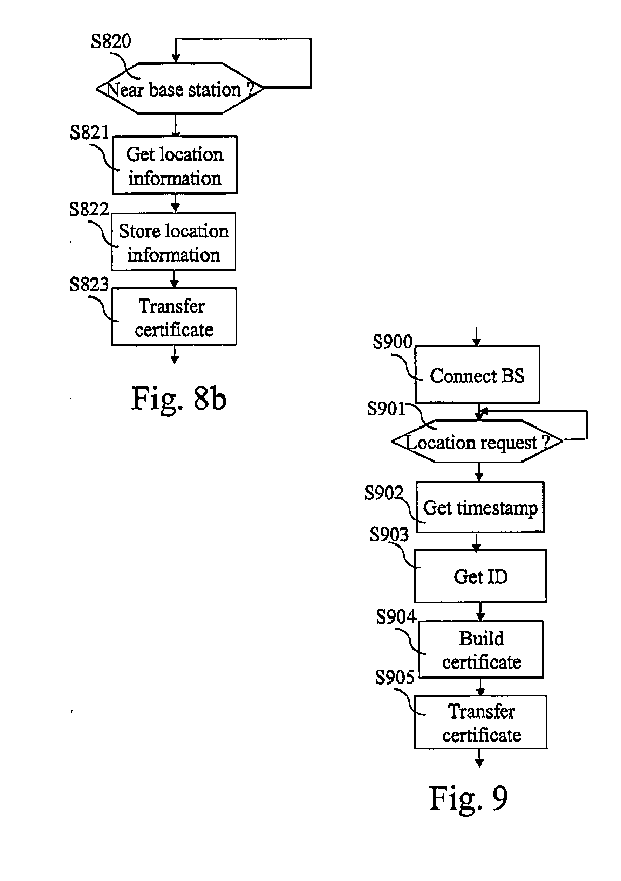

The third party 40 has, for example, an architecture based on components connected together by a bus 401 and a processor 300 controlled by the program as disclosed in Fig. 8 or 9.

The bus 401 links the processor 400 to a read only memory ROM 402, a random access memory RAM 403, possibly a Man-Machine Interface 404, a server interface 405 and a third party interface 407.

The memory 403 contains registers intended to receive variables and the instructions of the program related to the algorithm as disclosed in Fig. 8 or 9.

The processor 400 controls the operation of the Man-Machine Interface 406 if there is one and the third party interface 407.

The read only memory 402 contains instructions of the programs related to the algorithm as disclosed in Fig. 8 or 9, which are transferred, when the third party 40 is powered on to the random access memory 403.

The third party interface 407 may be an infrared interface like an IrDa one, a short range radio interface like a Bluetooth © one or any Near Field Communication interface or is an ADSL modem or an optic fibre transceiver.

The third party interface 407 may comprise means for detecting when the third party 40 receives request location message from a base station BS through the third party interface 407.

According to the type of the third party interface 407, it is possible to determine the position of the third party 40 from the base station BS when a request location message is received.

Communicating the type of third party interface 407 is then equivalent to communicating the position of the third party 40 from the base station BS.

The server interface 405 may be a wireless interface, a short range interface, an optic fibre transceiver or an Ethernet transceiver, etc. As example, the server interface 405 may be mixed up with the third party interface 407.

When the third party 40 is a mobile terminal, it receives signals transmitted by neighbouring base stations BS of the wireless cellular telecommunication network which belong or not to the same network operator as the base station BS.

The third party 40 memorises a signalled location information (their cell identities and/or unique network addresses of neighbouring base stations) in combination with a timestamp or not. This list of cells identities is used as location information in the location certificate according to some mode of realisation of the present invention.

The mobile terminal builds the certificate comprising the content of the location request received from the base station BS, and signs the content of the location request with the same private key that the one it uses to be authenticated by the wireless cellular telecommunication network. In a preferred mode of realisation, the certificate further comprises information enabling the determination of the location of the base station.

As example, the certificate comprises information representative of the location of the mobile terminal.

The information representative of the location of the mobile terminal are representative of the relative position of the mobile terminal from the base station and/or representative of the relative position of the mobile terminal from a reference point different from the base station.

The mobile terminal sends the certificate to the network server 10 through the communication link 60. According to different modes of realisation, the communication link takes alternate routes: via the third party interface 407 and the base station BS, or via a radio interface and a neighbouring base station BS.

The information representative of the relative position of the mobile terminal from a reference point different from the base station can be provided with a latitude / longitude indication if the third party 40 is equipped with a positioning system like a Global Positioning System transceiver (not represented in Fig.4).

The information representative of the relative position of the mobile terminal from a reference point different from the base station can be provided with at least one identifier of another base station BS or cell 15 of the wireless cellular telecommunication network.

When the third party 40 is the computer of the person which installs and/or maintains the base station BS, the localisation can be realised with an embedded Global Positioning System transceiver, and the information enabling the determination of the location of the base station BS is then latitude / longitude values. Alternatively, the information enabling the determination of the location of the base station BS can be a country and a postal code corresponding to the base station BS location manually entered in by the installer. Alternatively, the information enabling the determination of the location of the base station BS may be a number or an address. The third party 40 embeds an identification code and a signature which are registered in the wireless cellular telecommunication network. Alternatively, the identification code and the signature can be owned by the installer and manually entered in the maintenance device.

When the third party 40 is an access provider owning the connection of the base station BS to the telecommunication network 50, the localisation of the base station BS is realised from the location knowledge of the fixed access line end-point (phone line number, transport network address). The information enabling the determination of the location of the base station BS comprised in the certificate is in the form of geographical data agreed upon the access provider and the wireless cellular telecommunication network operator, like latitude / longitude values or postal address.

**Fig.5** depicts an algorithm executed by the base station according to the present invention.

More precisely, the present algorithm is executed by the processor 300 of the base station BS each time a message is received from the network server 10.

At step S500, the processor 300 detects the reception, through the network interface 304, of a message transferred by the network server 10.

At next step S501, the processor 300 checks if the message is representative of a command message for enabling or disabling the transmission of radio signals by the base station BS in the cell 15 of the base station BS.

If the message is not a command message for enabling or disabling the transmission of radio signals, the processor 300 stops the present algorithm.

If the message is a command message for enabling or disabling the transmission of radio signals, the processor 300 moves to step S502.

At step S502, the processor 300 checks if the message is a command message for disabling the transmission of radio signals transferred by the base station BS in the cell 15 of the base station BS.

If the message is a command message for disabling the transmission of radio signals transferred in the by the base station BS in the cell 15 of the base station BS, the processor 300 moves to step S504. Otherwise, the processor 300 moves to step S503.

At step S504, the processor 300 sets the transmission power of the radio signals to null value, i.e. the transmission of signals in the cell 15 of the base station BS is disabled for the base station BS. After that, the processor 300 stops the present algorithm.

In a variant, the processor 300 sets the transmission of the radio signals which are representative of at least one information to null value. The at least one information preferably identifies the network operator of the base wireless cellular telecommunication network the base station BS belongs to.

At step S503, the processor 300 sets the transmission power of the radio signals to a value which is different from the null value, i.e. the transmission of the radio signals in the cell 15 of the base station BS is enabled for the base station BS. After that, the processor 300 stops the present algorithm.

In a variant, the processor 300 sets the transmission power of the signals which are representative of at least one information to a value which is different from the null value. The at least one information preferably identifies the network operator of the base wireless cellular telecommunication network the base station BS belongs to.

After that, the processor 300 stops the present algorithm.

**Fig. 6a** depicts an algorithm executed by the network server according to a first mode of realisation of the present invention.

More precisely, the present algorithm is executed by the processor 200 of the network server 10.

The present algorithm is executed periodically or when the network server 10 receives a message from a newly installed base station BS.

At step S600, the processor 200 commands the transfer, through the network interface 204 of a location request message to the base station BS.

The location request message preferably comprises a token Kt.

At next step S601, the processor 200 receives, in response to the message transferred at step S600, a certificate generated by the third party 40. The certificate is received through the communication link 60, as example relayed by the base station BS.

At next step S602, the processor 200 checks the validity of the certificate.

The certificate comprises at least the identifier of the third party 40, the identifier of the base station BS and a signature. As example, the third party 40 generates the signature using its Authentication, Authorization, and Accounting (AAA) key and information comprised in the certificate.

The corresponding public key, known by the network server 10, can be used together with the content of the certificate, to guarantee the integrity of the content of the certificate, and to authenticate the third party 40. The nature of private and public keys, the signature generation, the integrity detection, and the source authentication scheme can be taken, for instance, to comply with RSA authentication algorithm. A certificate is considered as valid, if the identifier of base station BS included in the certificate is the same than the identifier the base station BS used to previously authenticate itself to the network. The signature is decoded with the public key of the third party 40 to form decoded information which have to be identical to the ones comprised in the certificate.

According to a variant of the invention, the identifier of the base station BS is signed by the base station BS using the private key of the base station BS, the corresponding public key being known by the network server 10. For the certificate to be considered as valid, the network server 10 checks the identifier and the signature of the base station BS.

If the location request message comprises a token Kt, the certificate, in order to be determined as valid, further comprises the token Kt.

According to a variant of the invention, the certificate comprises the information representative of the location of the base station BS.

According to another variant of the invention, the third party is a mobile terminal and the certificate comprises information representative ofthe location of the mobile terminal. The information representative of the location of the mobile terminal are representative of the relative position of the mobile terminal from the base station and/or representative of the relative position of the mobile terminal from a reference point different from the base station.

The information representative of the relative position of the mobile terminal from the base station is the type of communication interface used between the base station BS and the mobile terminal. Such information is representative of the accuracy of the location method and may be used in order to decide if the certificate is valid.

If the certificate is valid, the processor 200 moves to step S603. Otherwise, the processor 200 moves to step S605.

At step S603, the processor 200 checks if the information representative of the location of the base station BS is correct.

The information representative of the location of the base station BS is correct if it belongs to a given geographical area like as example the one the network server 10 is in charge or an area in which the base station BS has been registered previously.

The information representative of the location of the base station BS may be comprised in the certificate or may be deduced by the network server 10.

The information representative of the location of the base station BS varies depending on the third party 40. The information representing the location can be provided with a latitude / longitude indication if the third party 40 is equipped with a positioning system. Information representative of the location can also be a country and a postal code, a fixed phone line number on which the base station BS is connected when the third party 40 is an access provider like an Internet access provider or a person which installs the base station.

When the third party is a mobile terminal, the certificate may comprise information representative of the location of the mobile terminal. The information representative of the location of the mobile terminal are representative of the relative position of the mobile terminal from the base station and/or representative of the relative position of the mobile terminal from a reference point different from the base station.

The information representative of the relative position of the mobile terminal from the base station is the type of communication interface used between the base station and the mobile terminal.

The information representative of the relative position of the mobile terminal from a reference point different from the base station can be provided with a latitude / longitude indication if the third party 40 is equipped with a positioning system like a Global Positioning System transceiver.

These accurate information are particularly useful when the geographical area is an area where it is forbidden by law to transmit radio signals at full power like in the vicinity of hospitals, schools, etc.

The information representative of the relative position of the mobile terminal may be provided with at least one identifier of another base station BS or cell 15 of the wireless cellular telecommunication network or may be a list of nearby radio cell identities or network addresses of nearby base stations BS.

As the mobile terminal is located in the vicinity of the base station BS, it is possible to determine the location of the base station BS from the information representative of the location of the mobile terminal.

When the third party is a mobile terminal, the processor 200 may deduce the information representative of the location of the base station BS from the identifier of the third party 40 and from knowledge the network server 10 has of third party 40 location, as example from the identifier of another base station BS which relayed the certificate.

If the location of the base station BS is correct, the processor 200 moves to step S604. Otherwise, the processor 200 moves to step S605.

At step S604, the processor 200 commands the transfer, to the base station BS, of a command message for enabling the transmission of radio signals transferred by the base station BS in the cell 15 of the base station BS. After that, the processor 200 returns to step S600.

At step S607, the processor 200 commands the transfer, to the base station BS, of a command message for disabling the transmission of radio signals transferred by the base station BS in the cell 15 of the base station BS. After that, the processor 200 returns to step S600.

**Fig. 7a** depicts an algorithm executed by the base station according to a first mode of realisation of the present invention.

More precisely, the present algorithm is executed by the processor 300 of the base station BS.

At step S700, a location request message is received by the base station BS from the network server 10. The location request message preferably comprises a token Kt.

At next step S701, the processor 300 transfers a location request message to at least one third party 40. That message comprises at least the identifier of the base station BS and the token Kt if one is comprised in the message received at step S700.

The identifier ofthe base station BS may be signed by the base station BS.

The third party 40 is a mobile terminal located in the vicinity of the base station BS or is a server of the access provider of the base station BS or is the computer of the person which installs and/or maintains the base station BS.

At next step S702, the processor 300 detects, in response to the message transferred at step S701, the reception of a certificate from the third party 40.

At next step S703, the processor 300 transfers the received certificate to the network server 10 which sent the message received at step S700.

After that, the processor 300 returns to step S700.

It has to be noted here that in a variant, the processor 300 doesn't execute the steps S702 and S703 as the third party 40 doesn't use the base station BS for the transfer of the certificate to the network server 10.

**Fig. 6b** depicts an algorithm executed by the network server according to a second mode of realisation of the present invention.

More precisely, the present algorithm is executed by the processor 200 of the network server 10.

At step S610, the processor 200 commands the transfer, through the network interface 204, of a location request message to the base station BS.

The location request message optionally comprises a token Kt.

At next step S611, the processor 200 checks if a certificate generated by the third party 40 is received in response to the message transferred at step S610. The certificate is received from the communication link 60, as example relayed by the base station BS.

If a certificate generated by the third party 40 is received, the processor 200 moves to step S613. Otherwise, the processor 200 moves to step S612.

At step S612, the processor 200 checks if a variable is compatible with a threshold. The variable is as example, the value of a timer activated at the first transmission of the location request message to the base station BS or is the number of times a location request message has been transferred to the base station BS without the reception of any certificate or a timestamp comprised in the certificate.

The threshold is as example, a maximum delay between the time of transmission of the first location request message and the reception of the certificate or a maximum number of location request message transmission without any certificate reception or the maximum time to wait after the transmission of the first location request message.

If the variable is not compatible with the a threshold, the processor 200 moves to step S616. Otherwise, the processor 200 returns to step S610.

At step S613, the processor 200 checks the validity of the certificate.

The certificate comprises at least the identifier of the third party 40, the identifier of the base station BS, a timestamp or the token Kt and a signature.

The signature is decoded with the public key of the third party 40 to form decoded information which are identical to the ones comprised in the certificate.

If the location request message comprises a token Kt, the certificate, in order to be determined as valid, further comprises the token Kt.

If the certificate comprises a timestamp, the processor 200 checks if the timestamp is not obsolete and if the timestamp is too old, the certificate is not considered as valid.

If the certificate comprises the type of communication interface used between the base station and the mobile terminal, these data may be used in order to decide if the certificate is valid.

If the certificate is valid, the processor 200 moves to step S614. Otherwise, the processor 200 moves to step S616.

At step S614, the processor 200 checks if the location of the base station BS is correct as it has been disclosed at step S603 of the Fig. 6a.

If the location of the base station BS is correct, the processor 200 moves to step S615. Otherwise, the processor 200 moves to step S616.

At step S615, the processor 200 commands the transfer, to the base station BS, of a command message for enabling the transmission of radio signals transferred by the base station BS in the cell 15 of the base station BS. After that, the processor 200 returns to step S610.

At step S616, the processor 200 commands the transfer, to the base station BS, of a command message for disabling the transmission of radio signals transferred by the base station BS in the cell 15 of the base station BS. After that, the processor 200 returns to step S610.

**Fig. 7b** depicts an algorithm executed by the base station according to a second mode of realisation of the present invention.

More precisely, the present algorithm is executed by the processor 300 of the base station BS.

At step S710, a location request message is received by the base station BS from the network server 10. The location request message optionally comprises a token Kt.

At next step S712, the processor 300 checks if a third party 40, as example a mobile terminal, is located in the vicinity of the base station BS.

If a third party 40 is available, the processor 300 moves to step S713. If a third party 40 is not available, the processor 300 moves to step S712.

At next step S712, the processor 300 memorises the location request message with its content.

After that, the processor 300 returns to step S710.

At step S713, the processor 300 transfers a location request message to at least one third party 40. That message comprises at least the identifier of the base station BS and the token Kt if one is comprised in the message received at step S710.

The identifier of the base station BS may be signed by the base station BS using the base station BS private key.

The third party 40 is a mobile terminal located in the vicinity of the base station BS or is a server of the access provider of the base station BS or is the computer of the person which installs and/or maintains the base station BS.

At next step S714, the processor 300 detects, in response to the message transferred at step S713, the reception of a certificate from the third party 40. The certificate comprises the information as disclosed at step S613 of the Fig. 6b.

At next step S715, the processor 300 transfers the received certificate to the network server 10 which sent the message received at step S710.

After that, the processor 300 returns to step S710.

It has to be noted here that in a variant, the processor 300 doesn't execute the steps S714 and S715 as the third party 40 doesn't use the base station BS for the transfer of the certificate to the network server 10.

**Fig. 6c** depicts an algorithm executed by the network server according to a third mode of realisation of the present invention.

More precisely, the present algorithm is executed by the processor 200 of the network server 10.

At step S620, the processor 200 receives a certificate generated by a third party 40. The certificate is received from the communication link 60, as example relayed by the base station BS.

At next step S621, the processor 200 checks the validity of the certificate.

The certificate comprises at least the identifier of the third party 40, the identifier of the base station BS, a timestamp and a signature.

The signature is decoded with the public key of the third party 40 to form decoded information which are identical to the ones comprised in the certificate.

The processor 200 checks if the timestamp is not obsolete and if the timestamp is too old, the certificate is not considered as valid.

If the certificate is valid, the processor 200 moves to step S623. Otherwise, the processor 200 moves to step S622.

At step S622 the processor 200 checks if the location of the base station BS is correct using the same way disclosed at step S603 of the Fig. 6a.

If the location of the base station BS is correct, the processor 200 moves to step S623. Otherwise, the processor 200 moves to step S624.

At step S623, the processor 200 commands the transfer, to the base station BS, of a command message for enabling the transmission of signals transferred by the base station BS in the cell 15 of the base station BS. After that, the processor 200 returns to step S620.

At step S624, the processor 200 commands the transfer, to the base station BS, of a command message for disabling the transmission of radio signals transferred by the base station BS in the cell 15 of the base station BS. After that, the processor 200 returns to step S620.

**Fig. 7c** depicts an algorithm executed by the base station according to a third mode of realisation of the present invention.

More precisely, the present algorithm is executed by the processor 300 of the base station BS.

At step S720, a third party 40 is detected to be available, as example if a mobile terminal is located in the vicinity of the base station BS.

At next step S721, the processor 300 transfers a location request message to the third party 40. That message comprises at least the identifier of the base station BS.

At next step S722, the processor 300 detects, in response to the message transferred at step S721, the reception of a certificate from the third party 40. The certificate comprises the information as disclosed at step S603 and a timestamp.

At next step S723, the processor 300 memorises the received certificate.

At next step S724, the processor 300 transfers the received certificate to the network server 10.

In a variant, the last memorised certificate is transferred at another period of time.

After that, the processor 300 returns to step S720.

**Fig. 8a** depicts an algorithm executed by the third party 40 when the third party is a mobile terminal.

More precisely, the present algorithm is executed by the processor 400 of the third party 40.

At step S800, the processor 400 checks if a location request message is received through the third party interface 407.

If no location request message is received, the processor 400 moves to step S801. Otherwise, the processor 400 moves to step S804.

At step S801, the processor 400 checks if the mobile terminal is located in the coverage area of a neighbouring base station BS or in the coverage area of a Global Navigation Satellite System.

If the mobile terminal is located in the coverage area of a neighbouring base station BS or in the coverage area of a Global Navigation Satellite System, the processor 400 moves to step S802. Otherwise, the processor 400 returns to step S800.

At step S801, the processor 400 gets information representative of the location of the mobile terminal.

The mobile terminal receives signals transmitted by neighbouring base stations BS of the wireless cellular telecommunication network which belong or not to the same network operator as the base station BS.

The mobile terminal gets information representative of the location of the mobile terminal which are the cell identities and/or unique network address of neighbouring base stations BS.

In a variant, the mobile terminal collects measurement of characteristics of received signals (power level, time of Arrival, Angle of Arrival) from multiple neighbouring base stations BS. The mobile terminal collects such measurement as information representative of the location of the mobile terminal.

In another variant, the mobile terminal gets location information from a Global Positioning System transceiver.

In another variant, the third party 40 gets the type of communication interface used between the base station BS and the mobile terminal.

At next step S803, the processor 400 memorizes the cell identities and/or the unique network address of neighbouring base stations BS in a time stamped list used as information representative of the location of the mobile terminal, and/or the processor 400 memorizes the latitude / longitude coordinates along with a timestamp as information representative of the location of the mobile terminal and/or the processor 400 memorizes the type of communication interface used between the base station BS and the mobile terminal along with a timestamp as information representative of the location of the mobile terminal.

After that, the processor 400 returns to step S800.

At step S804, the processor 400 checks if the third party 40 is located in the coverage area of a neighbouring base station BS or in the coverage area of a Global Navigation Satellite System.

If the third party 40 is located in the coverage area of a neighbouring base station BS or in the coverage area of a Global Navigation Satellite System, the processor 400 moves to step S805. Otherwise, the processor moves to step S807.

At step S805, the processor 400 gets information representative of the location of the mobile terminal and memorizes it, as disclosed previously at steps S802 and S803.

At next step S807, the processor 400 builds the certificate by combining the contents of the location request received from the base station BS, information identifying the base station BS, information identifying the third party 40 and signs the combined data with the private key of the base station BS.

The processor may also build the certificate by combining the information representative of the location of the mobile terminal, the contents of the location request received from the base station BS, information identifying the base station BS, information identifying the third party 40 and signs the combined data with its private key.

The certificate is sent to the network server 10 through the communication link 60. According to different modes of realisation, the communication link takes alternate routes: via the third party interface 407 and the base station BS, or via a radio interface and a neighbouring base station BS.

The certificate may comprise a timestamp or a token received in the location request message received at step S800.

After that the processor 400 returns to step S800.

At steps S808 and S809, the processor 400 reads the information representative of the location of the mobile terminal memorized at step SS803 or S806, builds the certificate and transfers it as disclosed at step S807.

After that the processor 400 returns to step S800.

**Fig. 8b** depicts another algorithm executed by the third party 40 when the third party is a mobile terminal.

More precisely, the present algorithm is executed by the processor 400 of the third party 40.

At step S820, the processor 400 checks if the mobile terminal is within a given distance from the base station BS.

As example, the mobile terminal is within a given distance from the base station BS when a location request message can be received through the third party interface 407.

If a location request message is received, the processor 400 moves to step S821. Otherwise, the processor 400 returns to step S820.

At step S821, the processor 400 gets information representative of the location of the mobile terminal.

The mobile terminal receives signals transmitted by neighbouring base stations BS of the wireless cellular telecommunication network which belong or not to the same network operator as the base station BS.

The mobile terminal gets information representative of the location of the mobile terminal which are the cell identities and/or unique network address of neighbouring base stations BS.

In a variant, the mobile terminal collects measurement of characteristics of received signals (power level, time of Arrival, Angle of Arrival) from multiple neighbouring base stations BS. The mobile terminal collects such measurement as information representative of the location of the mobile terminal.

In another variant, the mobile terminal gets location information from a Global Positioning System transceiver.

In another variant, the third party 40 gets the type of communication interface used between the base station BS and the mobile terminal.

At next step S822, the processor 400 memorizes the cell identities and/or the unique network address of neighbouring base stations BS in a time stamped list used as information representative of the location of the mobile terminal, and/or the processor 400 memorizes the latitude / longitude coordinates along with a timestamp as information representative of the location of the mobile terminal and/or the processor 400 memorizes the type of communication interface used between the base station BS and the mobile terminal along with a timestamp as information representative of the location of the mobile terminal.

At next step S823, the processor 400 builds the certificate by combining the contents of the location request received from the base station BS, information identifying the base station BS, information identifying the third party 40 and signs the combined data with the private key of the base station BS.

The processor may also build the certificate by combining the information representative of the location of the mobile terminal, the contents of the location request received from the base station BS, information identifying the base station BS, information identifying the third party 40 and signs the combined data with its private key.

The certificate is sent to the network server 10 through the communication link 60. According to different modes of realisation, the communication link takes alternate routes: via the third party interface 407 and the base station BS, or via a radio interface and a neighbouring base station BS.

**Fig. 9** depicts an algorithm executed by the third party when the third party is an access provider.

At step S900, the processor 400 detects the connection of the base station BS to the access point. The access link is either a DSL link, an optical link.

At step S901, the processor 400 checks if a location request message is received through the third party interface 407.

If a location request message is received, the processor 400 moves to step S902. Otherwise, the processor 400 returns to step S901.

At step S902, the processor 400 gets a timestamp.

At next step S903, the processor 400 gets the unique identifier of the third party and the number which is related to the line end-point like a phone line number or the transport network address of the access provided to the base station BS.

At next steps S904 the processor 400 builds the certificate by combining the data obtained at steps S902 and S903 and signs the combined data with the private key.

At next step S905, the certificate is sent by the third party 40 to the network server 10 via the communication link 60.

Naturally, many modifications can be made to the embodiments of the invention described above without departing from the scope of the present invention.

## Claims

1. Method for controlling the operation of a base station of a wireless cellular telecommunication network comprising a network server, **characterised in that** the method is executed by the network server and comprises the steps of
- transferring a location request message to the base station,
- receiving in response, a certificate originated by a third party,
- checking the validity of the certificate,
- obtaining information representative of the location of the base station,
- checking if the base station is located in a given geographical area,
- transferring a command control message enabling the base station to transfer radio signals if the certificate is valid and if the base station is located in the given geographical area.

2. Method according to claim 1, **characterised in that** the method comprises further step of checking if a variable is compatible with a threshold and the command control message, enabling the base station to transfer radio signals, is transferred if the variable is compatible with the threshold.

3. Method according to claim 2, **characterised in that** the method comprises further step of:
- transferring a command control message disabling the transfer of radio signals by the base station if the certificate is not valid or if the base station is not located in the given geographical area.

4. Method according to claim 3, **characterised in that** the command control message disabling the transfer of radio signals by the base station is transferred if the variable is not compatible with the threshold.

5. Method according to claims 2 or 4, **characterised in that** the variable is a timestamp comprised in the certificate.

6. Method according to claim 1, **characterised in that** the location request message comprises a token and **in that** the certificate is not valid if the token is not comprised in the certificate.

7. Method according to any of the claims 1 to 6, **characterised in that** the information representative of the location of the base station are derived from the content of the certificate.

8. Method according to claim 7, **characterised in that** the certificate comprises the information representative of the location of the base station.

9. Method according to any of the claims 1 to 7, **characterised in that** the third party is a mobile terminal and **in that** the certificate comprises information representative of the location of the mobile terminal.

10. Method according to claim 9, **characterised in that** the information representative of the location of the mobile terminal are representative of the relative position of the mobile terminal from the base station and/or representative of the relative position of the mobile terminal from a reference point different from the base station.

11. Method according to the claim 10, **characterised in that** the information representative of the relative position of the mobile terminal from the base station is the type of communication interface used between the base station and the mobile terminal.

12. Method according to claim 11, **characterised in that** the certificate is not valid if the information representative of the relative position of the mobile terminal from the base station are upper than a predetermined value.

13. Method according to any of the claims 1 to 12, **characterised in that** the certificate contains the identifier of the base station and **in that** the certificate is not valid if the identifier of the base station is not correct.

14. Method according to claim 13, **characterised in that** the identifier of the base station is signed by the base station.

15. Method according to any of the claims 1 to 14, **characterised in that** the certificate originated by the third party is received from the base station or from another base station of the wireless cellular telecommunication network or through a communication link between the network server and the third party.

16. Method according to the claim 1, **characterised in that** the information representative of the location of the base station is derived from the other base station location.

17. Method for controlling the transfer of radio signals by a base station of a wireless cellular telecommunication network, the wireless cellular telecommunication network comprising a network server, **characterised in that** the method is executed by the base station and comprises the steps of:
- receiving from the network server a location request message,
- transferring the location message request to a third party,
- receiving, from the network server, a command control message enabling the base station to transfer radio signals or a command control message disabling the transfer of radio signals by the base station.

18. Method according to claim 17, **characterised in that** the method further comprises the steps of:
- receiving, in response to the location request message transferred to the third party, a certificate,
- transferring the certificate to the network server.

19. Method according to claim 17 or 18, **characterised in that** the location request message is transferred to the third party through a short range communication link.

20. Method, according to the claim 18 or 19, **characterised in that** the method further comprises the steps of memorising the received certificate.

21. Method according to the claim 20 **characterised in that** the certificate transferred to the network server is the last memorised certificate.

22. Method for certifying, by a third party, the location of a base station of a wireless cellular telecommunication network, **characterised in that** the third party is a mobile terminal and **in that** the method comprises the steps of:
- determining that the base station is within a given distance from the mobile terminal,
- transferring a certificate including at least information representative of the location of the mobile terminal.

23. Method according to claim 22, **characterised in that** the information representative of the location of the mobile terminal are representative of the relative position of the mobile terminal from the base station and/or representative of the relative position of the mobile terminal from a reference point different from the base station.

24. Method according to the claim 23, **characterised in that** the information representative of the relative position of the mobile terminal from the base station is the type of communication interface used between the base station and the mobile terminal.

25. Method according to any of the claims 22 to 24, **characterised in that** the certificate further comprises a timestamp.

26. Method according to any of the claims 22 to 25, **characterised in that** the mobile terminal executes the step of memorising information representative of the location of the mobile terminal when the mobile terminal is located in the coverage area of another base station or in the coverage area of a Global Navigation Satellite System and **in that** the memorised information representative of the location of the mobile terminal is comprised in the transferred certificate.

27. Method according to any of the claims 22 to 26, **characterised in that** the mobile terminal executes the step of memorising the location request message transferred by the base station and the certificate is transferred when the mobile terminal is located in the coverage area of another base station or in the coverage area of a Global Navigation Satellite System.

28. Device for controlling the operation of a base station of a wireless cellular telecommunication network comprising a network server, **characterised in that** the device is included in the network server and comprises:
- means for transferring a location request message to the base station,
- means for receiving in response a certificate originated by a third party,
- means for checking the validity of the certificate,
- means for obtaining information representative of the location of the base station,
- means for checking if the base station is located in a given geographical area,
- means for transferring a command control message enabling the base station to transfer radio signals if the certificate is valid and if the base station is located in the given geographical area.

29. Device for controlling the transfer of radio signals by a base station of a wireless cellular telecommunication network, the wireless cellular telecommunication network comprising a network server, **characterised in that** the device is included in the base station and comprises:
- means for receiving from the network server a location request message,
- means for transferring the location request message to a third party,
- means for receiving, from the network server, a command control message enabling the base station to transfer radio signals or a command control message disabling the base station to transfer radio signals.

30. Device for certifying the location of a base station of a wireless cellular telecommunication network, **characterised in that** the device is included in a mobile terminal and comprises:
- means for determining that the base station is within a given distance from the mobile terminal,
- means for transferring a certificate including at least information representative of the location of the mobile terminal.

31. Computer program which can be directly loadable into a programmable device, comprising instructions or portions of code for implementing the steps of the method according to claims 1 to 16, when said computer program is executed on a programmable device.

32. Computer program which can be directly loadable into a programmable device, comprising instructions or portions of code for implementing the steps of the method according to claims 17 to 21, when said computer program is executed on a programmable device.

33. Computer program which can be directly loadable into a programmable device, comprising instructions or portions of code for implementing the steps of the method according to claims 22 to 27, when said computer program is executed on a programmable device.
